# FASCICULE DE BREVET EUROPEEN

(11) **EP 2 894 585 B1**
(45) Date de publication et mention de la délivrance du brevet: **06.07.2016**
(21) Numéro de dépôt: 14198575.4
(22) Date de dépôt: 17.12.2014
(51) Int. Cl.: G06F 21/60, G06F 21/31, G06F 21/44

(54) **Procédé de saisie de données confidentielles sur un terminal**
Erfassungsverfahren von vertraulichen Daten auf einem Endgerät
Method for inputting confidential data in a terminal

(30) Priorité: 13.01.2014 FR 1450235
(43) Date de publication de la demande: 15.07.2015
(73) Titulaire: Morpho, 92130 Issy-les-Moulineaux (FR)
(72) Inventeur: Picon, Romain, 92130 Issy Les Moulineaux (FR)
(74) Mandataire: Regimbeau

(56) Documents cités:
- US-A- 5 664 099
- US-B1- 6 950 949
- Ben Albritton ET AL: "IIIF International Image Interoperability Framework: Image API 1.1", , 17 septembre 2013 (2013-09-17), XP055128093, Extrait de l'Internet: URL:https://web.archive.org/web/2013111116 5717/http://www-sul.stanford.edu/iiif/imag e-api/1.1/ [extrait le 2014-07-10]

## Description

### DOMAINE GENERAL

L'invention se rapporte au domaine de la saisie et de la visualisation d'informations confidentielles sur un terminal personnel.

L'invention concerne plus particulièrement un procédé permettant de sécuriser une telle saisie d'informations confidentielles.

### ETAT DE L'ART

On connaît depuis longtemps des procédés permettant à un utilisateur de saisir de façon sécurisée des informations qui lui sont confidentielles (informations d'authentification notamment) sur un terminal muni de moyens de saisie et d'un écran d'affichage.

Il est par exemple bien connu de protéger la saisie d'un code à plusieurs chiffres, tel qu'un code PIN, en affichant sur l'écran non pas chaque chiffre saisi mais un symbole de masquage remplaçant ce chiffre (une étoile par exemple), afin de prévenir l'interception du code saisi par un tiers malveillant portant son regard sur l'écran du terminal.

Pour répondre à l'augmentation du nombre de transactions de données confidentielles en ligne depuis un terminal utilisateur, il a été proposé des programmes sécurisés dits « environnements de confiance » (en anglais, « trusted execution environment », abrégé en TEE) configurant le terminal dans un état « sécurisé » avant la saisie par l'utilisateur du terminal de ses données confidentielles (en anglais « Trusted User Interface »).

Un environnement de confiance est généralement un programme sécurisé qui est indépendant d'un système d'exploitation dédié à des usages courants, et qui a accès aux moyens de saisie du terminal ainsi qu'à son écran. Dans l'état sécurisé, des données saisies par l'utilisateur via les moyens de saisie du terminal sont sélectivement traitées par le programme sécurisé.

Une telle interface garantit à l'utilisateur qu'il visualise et valide des informations authentiques (montant d'une transaction, acteurs de la transaction), et qu'il saisisse en toute confiance ses informations personnelles ou confidentielles (un code PIN par exemple).

Il est donc important d'avertir l'utilisateur que l'interface de confiance a bien configuré le terminal dans l'état sécurisé, avant qu'il saisisse ses données confidentielles.

Pour avertir l'utilisateur d'un tel évènement, il a été proposé dans le document US 7 302 585 de définir une image de confiance connue de l'utilisateur indicative de l'état sécurisé du terminal par l'interface de confiance. Avant une saisie d'informations confidentielles par l'utilisateur, l'image de confiance est affichée à l'écran en un exemplaire ou bien plusieurs fois dans une mosaïque, afin d'informer l'utilisateur que cet état sécurisé est bien actif.

Toutefois, cette solution ne confère pas à l'utilisateur une protection absolue contre des attaques par hameçonnage. En effet, un tiers malintentionné présent dans l'environnement de l'utilisateur ou ayant placé des caméras astucieusement placées dans cet environnement pourrait intercepter l'image de confiance affichée à l'écran et comprendre qu'elle indique que l'utilisateur est sur le point de saisir des informations confidentielles. Ce tiers pourrait alors reproduire l'image de confiance dans un programme malveillant lequel imiterait le comportement du programme de confiance en affichant l'image de confiance sur le terminal, dans le but d'induire l'utilisateur en erreur et ainsi récupérer ses informations confidentielles.

### PRESENTATION DE L'INVENTION

L'invention vise à donc à encore améliorer la confidentialité de la saisie de données confidentielles sur un terminal mettant en oeuvre une interface de confiance, sans augmenter le coût de fabrication du terminal.

Il est donc proposé un procédé de saisie de données confidentielles sur un terminal comprenant des moyens de saisie, des moyens( 10) pour exécuter un programme de confiance et un écran d'affichage, le procédé comprenant les étapes suivantes mises en oeuvre avant la saisie: prise de contrôle exclusive des moyens de saisie par le programme de confiance, affichage sur l'écran d'une image de confiance connue de l'utilisateur du terminal et indicative de la prise de contrôle et, après la prise de contrôle et avant l'affichage, une étape de sélection de l'image de confiance comme une partie d'une image de référence prédéterminée par l'utilisateur, la sélection étant variable d'une saisie à l'autre.

Comme seule une partie de l'image de confiance prédéterminée est affichée à l'écran au cours de la procédure de saisie, et que cette partie varie pour chaque nouvelle saisie de données confidentielles, un tiers malveillant ne serait pas capable de reproduire l'entièreté de l'image de confiance dans un programme de hameçonnage destiné à induire l'utilisateur du terminal en erreur.

Bien entendu, l'image de référence peut représenter tout type d'information : un dessin, un caractère, une suite de caractères, telle que tout ou partie d'une phrase ou d'un texte, etc.

L'image de confiance peut être sélectionnée à partir de données de sélection choisies par l'utilisateur et acquises par les moyens de saisie après la prise de contrôle. En variante, l'image de confiance est sélectionnée aléatoirement.

Le programme de confiance peut recevoir l'image de confiance d'un serveur distant. La réception de l'image de confiance peut de plus être commandée par l'envoi d'une requête au serveur distant, la requête étant générée par le programme de confiance à partir des données de sélection acquises, la sélection de l'image de confiance étant mise en oeuvre par le serveur distant.

Le procédé proposé peut comprendre en outre l'affichage sur l'écran d'un motif de partitionnement à N régions avant l'affichage de l'image de confiance, chaque région étant associée à une partie respective de l'image de référence, les données de sélection acquises par les moyens de saisie étant représentatives d'un nombre inférieur à N de régions du motif de partitionnement, sélectionnées par l'utilisateur.

Les moyens de saisie peuvent comprendre un élément sensible au toucher, les données de sélection étant alors sont représentatives d'au moins une zone touchée par l'utilisateur.

Si l'élément sensible au toucher est compris dans l'écran d'affichage, la zone touchée peut être représentative d'un ensemble de points contigus de l'écran touchés depuis la mise en contact d'un corps extérieur avec la dalle jusqu'à une mise hors contact subséquente dudit corps extérieur avec l'écran.

Les étapes du procédé peuvent être répétées pour plusieurs une première saisie et une deuxième saisie suivant la première saisie, le procédé comprenant en outre les étapes de mémorisation d'une première image de confiance affichée pour la première saisie, et de comparaison entre une deuxième image de confiance à afficher pour la deuxième saisie avec la première image de confiance mémorisée,
la deuxième image de confiance étant affichée seulement si elle diffère de la première image.

Il est proposé selon un deuxième aspect un produit programme d'ordinateur de confiance comprenant des instructions de code de programme pour l'exécution des étapes suivantes, lorsqu'il est exécuté par un terminal comprenant des moyens de saisie et un écran d'affichage, avant une saisie de données confidentielles : prendre un contrôle exclusif des moyens de saisie, commander l'affichage sur l'écran d'une image de confiance indicative de la prise de contrôle, le produit programme d'ordinateur étant caractérisé en ce qu'il est en outre configuré pour commander la sélection de l'image de confiance comme une partie d'une image de référence prédéterminée par l'utilisateur, la sélection étant variable d'une saisie à l'autre.

Il est également proposé, selon un troisième aspect, un terminal comprenant des moyens de saisie, un écran d'affichage, et des moyens pour exécuter le programme de confiance selon le deuxième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1 et 2 représentent schématiquement un système selon un mode de réalisation de l'invention.
- La figure 3 est un organigramme d'étapes d'un procédé de saisie de données confidentielles, selon un mode de réalisation de l'invention.
- La figure 4 détaille des sous-étapes d'une étape de l'organigramme de la figure 3, selon un mode de réalisation de l'invention.
- La figure 5 présente différents états de l'écran d'un terminal au cours de la mise en oeuvre d'un procédé de saisie selon un premier mode de réalisation.
- La figure 6 présente différents états de l'écran d'un terminal au cours de la mise en oeuvre d'un procédé de saisie selon un deuxième mode de réalisation.
Sur l'ensemble des figures, les éléments similaires portent des références identiques.

### DESCRIPTION DETAILLEE DE L'INVENTION

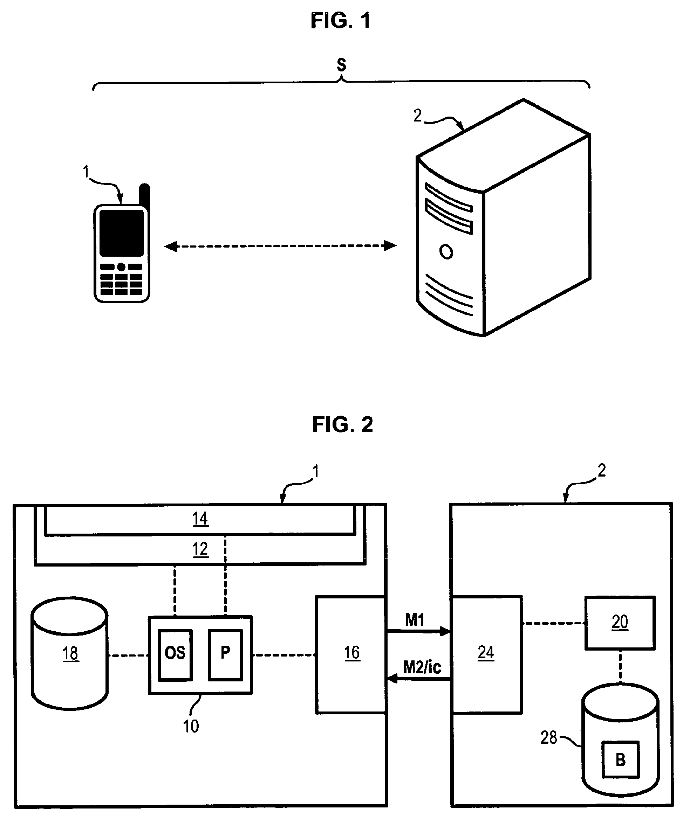

On a illustré sur la **figure 1** et sur la **figure 2****,** un système S comprenant au moins un terminal 1 et un serveur distant 2.

Le terminal 1 comprend des moyens de communication 16, des moyens de traitement de données tel qu'un processeur 10, une mémoire 18, un écran d'affichage 12, et des moyens de saisie 14.

Les moyens de saisie 14 peuvent comprendre un clavier et/ou un élément sensible au toucher (plus généralement toute interface homme / machine). L'élément sensible au toucher peut être compris dans l'écran d'affichage 12, de façon à former avec celui-ci un écran tactile.

Le processeur 10 est prévu pour exécuter un système d'exploitation OS, ainsi qu'un programme de confiance P indépendant du système d'exploitation OS.

Le programme de confiance P comprend des instructions de code de programme pour l'exécution de différentes tâches.

Le programme de confiance P est d'une part configuré pour ouvrir un accès en lecture exclusif aux moyens de saisie 14, c'est-à-dire que toute donnée acquise par les moyens de saisie après cette ouverture d'accès ne peut être traitée que par le programme de confiance, à l'exclusion du système d'exploitation ou tout autre programme installé dans le terminal 1. Dans la suite du présent texte, on qualifiera une telle ouverture d'accès de « prise de contrôle exclusive ».

Le programme de confiance P également configuré pour commander l'affichage d'images sur l'écran 12, et pour communiquer avec le serveur distant 2 via les moyens de communication 16.

Le programme de confiance P est en outre configuré pour traiter des données confidentielles acquises par les moyens de saisie 12. Ce traitement peut consister par exemple en l'authentification de l'utilisateur auprès du terminal lui-même ou auprès d'un site distant auquel le terminal a accès via les moyens de communication 16 ; ce traitement peut également faire partie d'une transaction bancaire.

Les moyens de communication 16 peuvent être du type sans fil (Wifi, cellulaire, etc.) ou bien du type filaire.

La mémoire 18 peut être de type disque dur, flash, EEPROM ou bien une clé USB amovible.

Par ailleurs, le serveur 2 comprend des moyens de communication 24 adaptée pour communiquer avec les moyens de communication 16 du terminal 1.

Le serveur 2 comprend également des moyens de traitement donnait 20 ainsi qu'une mémoire 28 stockant une base de donnée B destinée à contenir une ou plusieurs images de confiance, chaque image de confiance étant associée à un utilisateur respectif.

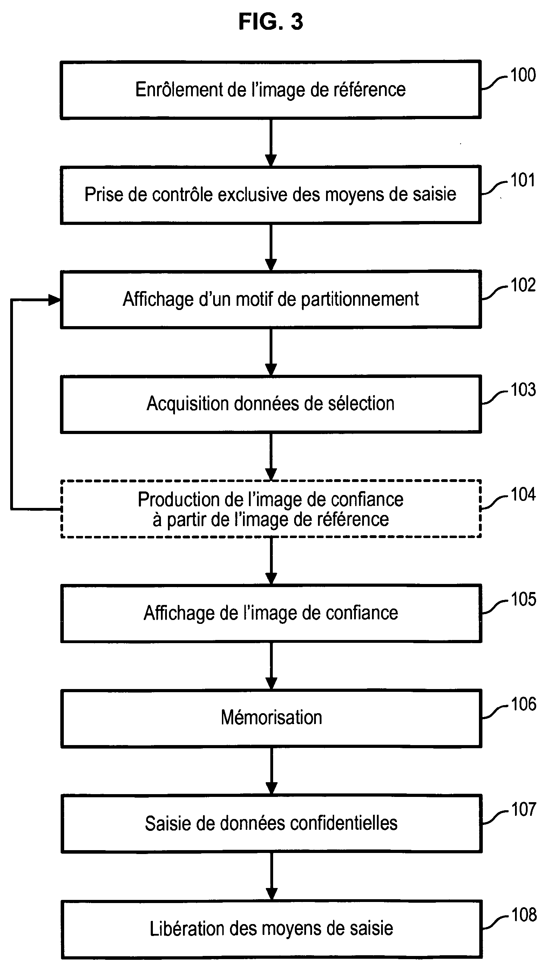

On va maintenant détailler les étapes du procédé illustré sur la **figure 3****.**

Dans une étape préliminaire d'enrôlement 100, un utilisateur détermine une image de référence IR connue de lui seul, par l'intermédiaire du terminal 1 ou non. L'étape d'enrôlement 100 peut par exemple comprendre l'envoi par le programme de confiance P de l'image. de référence préalablement choisie par l'utilisateur, au serveur distant 2, qui stocke cette image de référence dans sa base de données B. L'image de confiance n'étant pas stockée par le terminal 1, elle n'est pas récupérable lors d'un vol du terminal 1 par un tiers malveillant. En variante, cette image de référence est stockée dans une zone de la mémoire 18 du terminal, cette zone étant de préférence accessible uniquement par le programme P de façon à éviter une lecture de cette image de référence par un programme malveillant installé sur le terminal 1 et typiquement lancé par le système d'exploitation OS.

Dans une étape référencée 101, le programme de confiance P prend le contrôle des moyens de saisie 14 de façon exclusive. Suite à cette prise de contrôle exclusif, toute donnée acquise par les moyens de saisie 14 sera traitée exclusivement par le programme de confiance P (et non pas par le système d'exploitation OS).

Dans une étape 104, une image de confiance IC est produite à partir de l'image de référence IR après la prise de contrôle. L'image de confiance IC est une partie de l'image de référence IR sélectionnée dans celle-ci ; en d'autres termes, l'image de référence IR étant représentée par un ensemble de pixels, l'image de confiance IC est représentée par un sous-ensemble de cet ensemble de pixels. Dans le mode de réalisation présenté ci-après, la production 104 de l'image de confiance IC est mise en oeuvre par le serveur 2, mais peut, en variante, être mise en oeuvre par le programme de confiance P lui-même.

L'image de confiance IC peut être sélectionnée dans l'image de référence en fonction de données de sélection acquises par les moyens de saisies lors d'une étape préalable 103 mise en oeuvre après la prise de contrôle 101 ; l'utilisateur participe alors à la détermination de cette image de confiance dans l'image de référence. En variante, l'image de confiance IC est sélectionnée aléatoirement dans l'image de référence IR.

L'image de confiance IC est ensuite affichée sur l'écran 12 dans une étape référencée 105. L'utilisateur du terminal 1 peut alors vérifier si l'image de confiance IC affichée à l'écran 12 correspond bien à une partie de l'image de référence IR qu'il a préalablement choisie au cours de l'étape d'enrôlement 100. L'utilisateur est ainsi bien assuré que le programme de confiance a obtenu un accès exclusif aux moyens de saisie 14.

L'utilisateur peut alors, dans une étape référencée 107, entrer sur le terminal 1, et ce via les moyens de saisie 12, des données confidentielles qui sont ensuite traitées exclusivement par le programme de confiance P.

Dans une étape 106, l'image de confiance IC est mémorisée (par exemple dans la mémoire 18 du terminal 1 ou bien sur le serveur distant 2). Cette étape de mémorisation peut être mise en oeuvre avant l'affichage de l'image de confiance ou bien après.

Après la saisie 107 des données confidentielles, et leur traitement, le programme de confiance libère 108 l'accès aux moyens de saisie 14. Les moyens de saisie 14 peuvent après la libération 108 être utilisés par le système d'exploitation OS.

Les étapes 101 à 108 peuvent être répétées pour chaque saisie de données confidentielles que le programme de confiance P est amené à traiter.

L'étape d'enrôlement 100 peut également être répétée entre plusieurs séquences des étapes 101 à 108 de façon à changer d'image de référence IR.

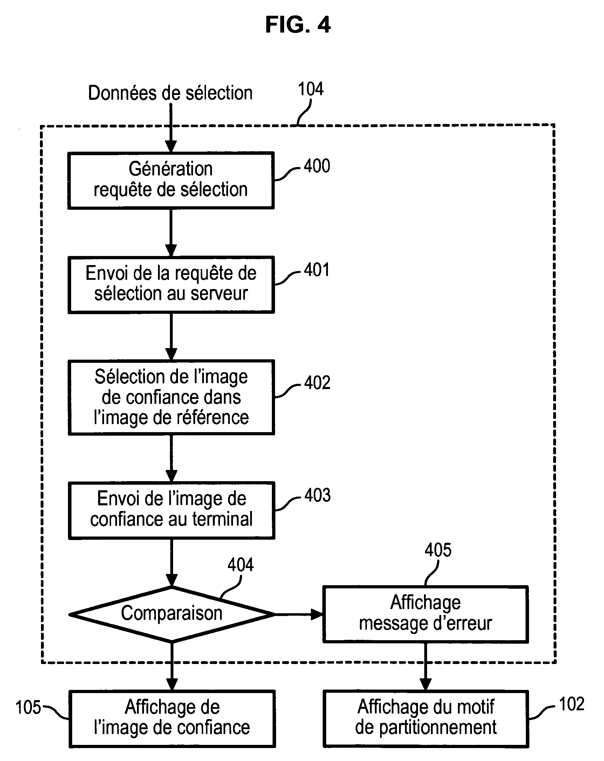

En référence à la **figure 4****,** l'étape 104 de production de l'image de confiance peut comprendre les sous-étapes suivantes dans un mode de réalisation dans lequel le serveur distant 2 est sollicité.

Le programme de confiance P génère dans une sous-étape 400 une requête de sélection M1, et commande l'envoi 401 de cette requête M1 au serveur distant 2 via les moyens de communication 16. La requête de sélection M1 peut typiquement comprendre un identifiant permettant d'identifier le programme de confiance P émetteur (tel qu'un numéro de programme), le terminal (par un numéro de modèle ou de série), ou bien l'utilisateur lui-même si le terminal est multi-utilisateurs.

Les moyens de communications 24 du serveur reçoivent la requête M1 et la transmettent ensuite aux moyens de traitement 20 du serveur distant 2. Dans une étape 402, les moyens de traitement 20 accèdent à la base de données B et y recherchent une image de référence IR associée à l'identifiant contenu dans la requête M1. Une fois l'image de référence IR trouvée, les moyens de traitement 20 sélectionnent l'image de confiance IC comme partie de l'image de référence IR.

Les moyens de traitement 20 génèrent ensuite une réponse M2 comprenant l'image de confiance IC sélectionnée, qui est renvoyée 403 au terminal 1 ayant émis la requête M1.

Suite à la réception de la réponse M2, le terminal 1 met en oeuvre une comparaison 404 de l'image de confiance IC reçue avec une image de confiance mémorisée dans le cadre d'une précédente saisie de données confidentielles (étape 106).

Si les images comparées sont identiques alors un message d'erreur est affiché 405 à l'écran 12, invitant l'utilisateur à saisir de nouvelles données de sélection (dans une nouvelle mise en oeuvre de l'étape 103). Ceci interdit à l'utilisateur de sélectionner une même image de confiance dans l'image de référence, pour plusieurs saisies successives. Un utilisateur ayant pris l'habitude de sélectionner toujours la même image de confiance dans l'image de référence pourrait être victime d'attaques par hameçonnage mises en oeuvre par un programme malveillant qui se bornerait à n'afficher que cette même image de confiance ; cette interdiction permet donc d'éviter une telle situation.

Si les images comparées sont différentes, l'affichage 105 de l'image de confiance IC sur l'écran 12 est réalisé.

L'image de confiance ne couvre de préférence pas une trop grande partie de l'image de référence, de préférence moins de 50% de celle-ci en surface, ce qui permet de rendre plus ardues les tentatives de récupération de l'image de référence.

Le procédé peut ainsi mettre en oeuvre une limitation de la surface de l'image de référence dans laquelle l'image de confiance peut être sélectionnée (ce qui revient à interdire la sélection d'une partie de l'image de référence) ; ainsi, l'image de référence ne peut en aucun cas être reconstruite par l'image de référence.

Le procédé peut également comprendre l'affichage à l'écran d'un message invitant l'utilisateur à changer l'image de référence après un temps déterminé ou un nombre de saisie déterminé. Il peut en effet être considéré qu'après l'image de référence a été complètement dévoilée et il convient d'enrôler une nouvelle image de référence.

### Mode de réalisation à grille

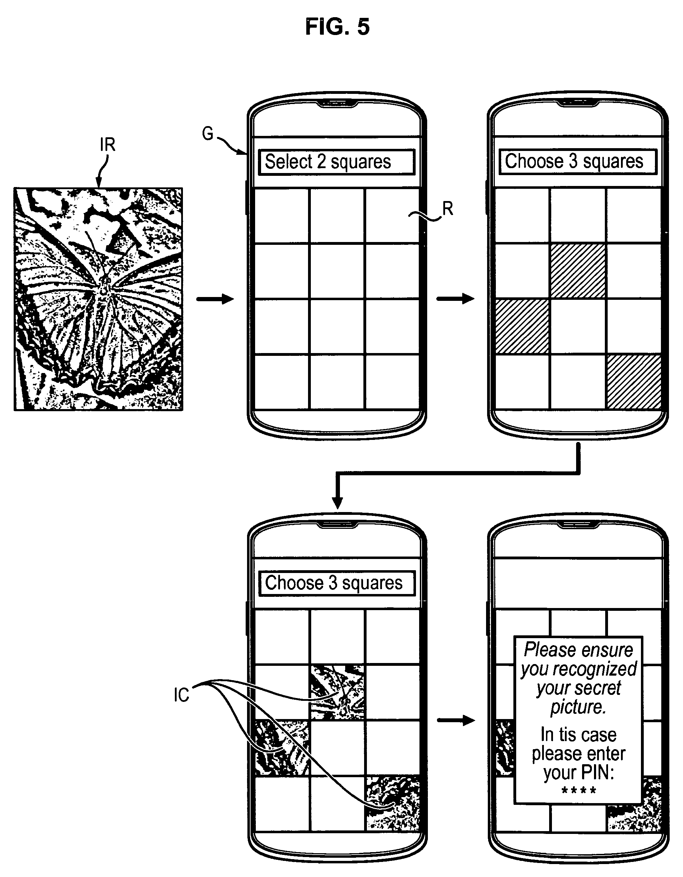

On a illustré sur la figure 5, différents états de l'écran du terminal 1 au cours de l'exécution du procédé de saisie, selon un premier mode de réalisation dit « à grille ».

Dans ce mode de réalisation à grille, les moyens de saisie 14 consistent en un élément sensible au toucher compris dans l'écran d'affichage 12. De plus, dans une étape 102 réalisée avant l'acquisition 103 des données de sélection, le programme de confiance P commande l'affichage 102 d'un motif de partitionnement G prédéterminé. Le motif de partitionnement G comprend plusieurs régions R, chaque région délimitant une région respective de l'image de référence.

Un message invitant l'utilisateur à sélectionner un nombre N de régions R inférieur au nombre total de régions du motif de partitionnement G peut également être affiché au cours de l'étape 102.

Chaque fois que l'utilisateur touche l'une des régions R sur l'écran 12, l'élément sensible au toucher acquiert 103 des données de sélection représentatives de la région touchée et transmet ces données de sélection au programme de confiance ; ensuite, la région correspondant à ces données de sélection est sélectionnée dans l'image de référence (étape 104).

L'étape 103 répétée N fois produit alors N données de sélection représentatives de N régions touchées par l'utilisateur.

L'image de confiance IC produite à l'issue de l'étape 104 est alors l'union de N régions (connexes ou non) dans l'image de référence IR, correspondant aux régions R du motif de partitionnement touchées par l'utilisateur sur l'écran tactile.

On notera que, dans ce mode de réalisation à grille, les données de sélection peuvent être un simple indice de région R dans la grille G. La requête M1 envoyée au serveur 2 peut ainsi comprendre N indices de régions dans la grille affichée, tenant sur un nombre de bits réduit, ce qui permet de réduire la taille de la requête M1 transférées entre le terminal 1 et le serveur 2 par rapport à des requêtes contenant des données de sélection plus complexes, telles qu'une ensemble de coordonnées de pixels.

Dans l'exemple illustré sur la **figure 5****,** le motif de partitionnement G est une grille de 3x4 cases carrées de mêmes dimensions et colorés selon une même couleur prédéterminée, la grille étant de dimensions superposables à l'image de référence ; en haut de l'écran, est affiché un message invitant l'utilisateur à toucher 3 cases parmi les 12 cases qui composent la grille.

Chaque fois que l'utilisateur touche l'une des cases, le programme de confiance peut alors colorer chaque case touchée dans selon couleur différente des cases non-touchées dans le motif de partitionnement affiché à l'écran (image en haut à droite de la figure 5), afin de permettre à l'utilisateur de comprendre le nombre de cases qu'il a déjà sélectionnées et le nombre de cases qu'il lui reste à sélectionner.

Sur l'image en haut à droite, trois régions de la grille ont été touchées par l'utilisateur.

Si l'utilisateur touche une case qu'il a déjà touchée, le programme de confiance peut en outre « désélectionner » la case retouchée.

L'étape 107 de saisie des données confidentielles peut être précédée de l'affichage d'une fenêtre semi-transparente affichée « au-dessus » de la grille G comme représenté sur l'image en bas à droite de la **figure 5****,** la fenêtre invitant l'utilisateur à vérifier si l'image de confiance IC affichée est bien une partie de l'image de référence, et à rentrer ses données confidentielles (un code PIN dans l'exemple illustré) si tel est bien le cas.

### Mode de réalisation à tracé libre

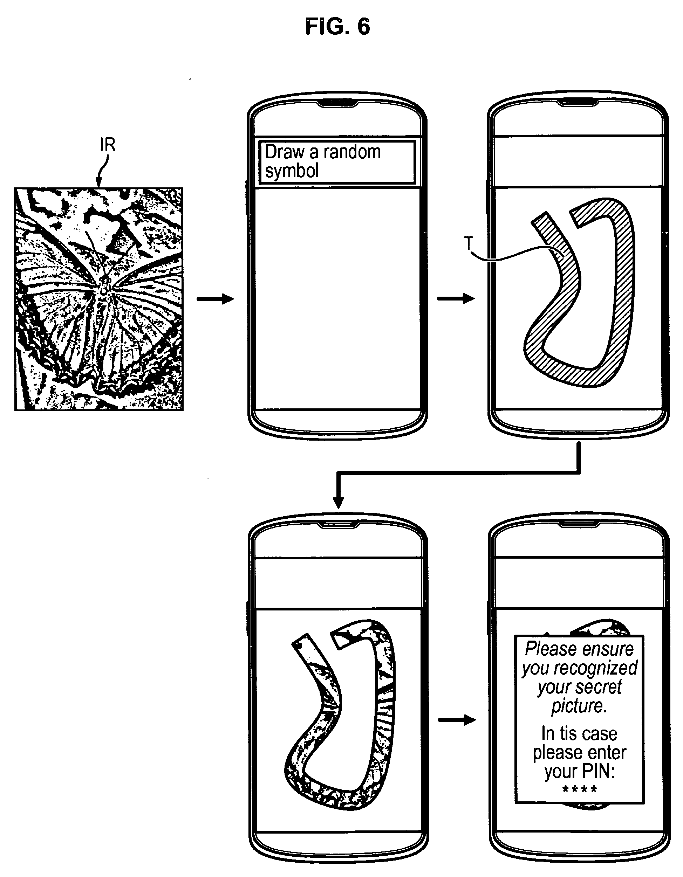

On a illustré sur la **figure 6****,** différents états de l'écran du terminal au cours de l'exécution du procédé de saisie selon un deuxième mode de réalisation dit« à tracé libre ».

Tout comme dans la variante à grille, les données de sélection correspondent à une zone de l'écran tactile touché par l'utilisateur. Toutefois, dans la variante à tracé libre, cette zone n'est pas un ensemble de régions de taille prédéterminées, mais une zone libre T dessinée par l'utilisateur.

Plus précisément, la zone touchée sur l'écran tactile par l'utilisateur est constituée d'un ensemble de points contigus de l'écran touchés depuis la mise en contact d'un corps extérieur avec l'écran tactile jusqu'à une mise hors contact subséquente du corps extérieur avec l'écran tactile (le corps extérieur étant typiquement un ou plusieurs doigts de l'utilisateur, un stylet, etc).

Le procédé selon ce mode de réalisation à tracé libre peut ainsi comprendre une étape dans laquelle est affichée une image de couleur prédéfinie superposable à l'image de référence, et un message d'invitation à l'utilisateur à tracer une zone librement choisie par l'utilisateur.

Le mode de réalisation à tracé libre permet une exécution très rapide de l'étape 103 d'acquisition des données de sélection, par un simple tracé de l'utilisateur sur l'écran tactile ; par ailleurs, les chances qu'un utilisateur sélectionne les mêmes pixels lors de deux saisies successives sont statistiquement très faibles ce qui contribue à complexifier la reconstruction de l'image de référence IR par un tiers à proximité.

Le procédé selon le mode de réalisation à tracé libre peut comprendre l'afficher la fenêtre semi-transparente décrite pour le mode de réalisation à grille.

### Autres modes de réalisation

D'autres modes de réalisation non illustrés sont également envisageables.

L'image de référence IR étant stockée dans la mémoire 18 du terminal 1, les étapes décrites précédemment peuvent être mises en oeuvre localement par le programme de confiance P, sans le concours du serveur distant 2. Au cours de l'étape 104, le programme de confiance P accède alors à l'image de référence IR stockée dans la mémoire 18 du terminal 1 pour produire l'image de confiance à afficher ensuite.

L'étape de mémorisation 106 de l'image de confiance peut également être effectuée non pas dans la mémoire 18 du terminal mais dans la mémoire 28 du serveur 2, avant l'étape 403.

D'autres types de moyens de saisie 14 peuvent être utilisés dans le terminal, par exemple un clavier. Dans la variante à grille, des touches directionnelles du clavier peuvent être utilisées pour naviguer dans le motif de partitionnement et en sélectionner des régions R.

Le procédé selon l'invention n'est pas limité au contexte de la saisie d'un code PIN mais peut être mis en oeuvre pour sécuriser la saisie d'autres types de codes d'authentification (par exemple un code d'accès à un site web ou à un service particulier fourni par le programme de confiance, ou, plus généralement, d'autres types de données confidentielles.

## Revendications

1. Procédé de saisie de données confidentielles sur un terminal (1) comprenant des moyens de saisie (14), des moyens (10) pour exécuter un programme de confiance (P) et un écran d'affichage (12), le procédé comprenant les étapes suivantes mises en oeuvre avant la saisie (107):
- prise de contrôle exclusive (101) des moyens de saisie (14) par le programme de confiance (P),
- affichage (105) sur l'écran (12) d'une image de confiance (IC) connue de l'utilisateur du terminal (1) et indicative de la prise de contrôle (101),
le procédé étant **caractérisé en ce qu'**il comprend, après la prise de contrôle (101) et avant l'affichage (105), une étape de sélection (104) de l'image de confiance (IC) comme une partie d'une image de référence (IR) prédéterminée par l'utilisateur, la sélection (104) étant variable d'une saisie à l'autre.

2. Procédé selon la revendication 1, dans lequel l'image de confiance est sélectionnée à partir de données de sélection choisies par l'utilisateur et acquises (103) par les moyens de saisie (14) après la prise de contrôle (101).

3. Procédé selon l'une des revendications 1 et 2, dans lequel le programme de confiance (P) reçoit (403) l'image de confiance d'un serveur distant (2).

4. Procédé selon les revendications 2 et 3 prises en combinaison, dans lequel la réception (403) de l'image de confiance (IC) est commandée par l'envoi (401) d'une requête au serveur distant, la requête étant générée (400) par le programme de confiance (P) à partir des données de sélection acquises (103), la sélection (402) de l'image de confiance étant mise en oeuvre par le serveur distant (2).

5. Procédé selon l'une des revendications 2 à 4, comprenant en outre l'affichage (102) sur l'écran d'un motif de partitionnement (G) à N régions (R) avant l'affichage (105) de l'image de confiance (IC), chaque région (R) étant associée à une partie respective de l'image de référence (IR), les données de sélection acquises (103) par les moyens de saisie (14) étant représentatives d'un nombre inférieur à N de régions (R) du motif de partitionnement (G), sélectionnées par l'utilisateur.

6. Procédé selon l'une des revendications 2 à 5, dans lequel, les moyens de saisie (14) comprenant un élément sensible au toucher, les données de sélection sont représentatives d'au moins une zone touchée par l'utilisateur.

7. Procédé selon la revendication 6, dans lequel, l'élément sensible au toucher étant compris dans l'écran d'affichage (12), la zone touchée est représentative d'un ensemble de points contigus de l'écran (12) touchés depuis la mise en contact d'un corps extérieur avec la dalle jusqu'à une mise hors contact subséquente dudit corps extérieur avec l'écran (12).

8. Procédé selon l'une des revendications 1 à 7, dont les étapes sont répétées pour plusieurs une première saisie et une deuxième saisie suivant la première saisie, le procédé comprenant en outre les étapes de
- mémorisation (106) d'une première image de confiance affichée pour la première saisie,
- comparaison (404) entre une deuxième image de confiance à afficher pour la deuxième saisie avec la première image de confiance mémorisée,
la deuxième image de confiance étant affichée (105) seulement si elle diffère de la première image.

9. Produit programme d'ordinateur (P) de confiance comprenant des instructions de code de programme pour l'exécution des étapes suivantes, lorsqu'il est exécuté par un terminal (1) comprenant des moyens de saisie (14) et un écran d'affichage (12), avant une saisie (107) de données confidentielles :
- prendre un contrôle exclusif (101) des moyens de saisie,
- commander l'affichage (105) sur l'écran (12) d'une image de confiance (IC) indicative de la prise de contrôle, et
le produit programme d'ordinateur (P) étant **caractérisé en ce qu'**il est en outre configuré pour commander la sélection (104) de l'image de confiance (IC) comme une partie d'une image de référence (IR) prédéterminée par l'utilisateur, la sélection (104) étant variable d'une saisie à l'autre.

10. Terminal (1) comprenant des moyens de saisie (14), un écran d'affichage (12), et des moyens (10) pour exécuter un programme de confiance (P) conforme à la revendication 9.

11. Terminal (1) selon la revendication 10, dans lequel les moyens de saisie (14) comprennent une dalle sensible au toucher.

12. Terminal (1) selon l'une des revendications 10 et 11, comprenant en outre des moyens pour communiquer avec un serveur distant (2), et dans lequel le produit programme d'ordinateur (P) est configuré pour :
- transmettre au serveur distant (2) une requête de sélection (M1) comprenant des données de sélection choisies par l'utilisateur et acquises (103) par les moyens de saisie (14) après la prise de contrôle (101), et
- recevoir (403) du serveur distant l'image de confiance (IC) sélectionnée en réponse à la requête.

13. Système (S) comprenant un terminal (1) selon la revendication 12 et un serveur (2) comprenant des moyen de traitement de données (20), des moyens de communication (24) avec au moins un terminal (1) selon la revendication 12, les moyens de traitement de données étant configurés pour
- sélectionner une image de confiance (IC) comme une partie de l'image de référence (IR) prédéterminée, à partir de la requête de sélection (M1) reçues par les moyens de communications (24), et
- transmettre au terminal (1) l'image de confiance (IC) sélectionnée.

## Patentansprüche

1. Verfahren zum Erfassen von vertraulichen Daten auf einem Endgerät (1), umfassend Mittel zum Erfassen (14), Mittel (10) zum Durchführen eines Vertrauensprogramms (P) und einen Anzeigebildschirm (12), wobei das Verfahren die folgenden Schritte umfasst, die vor dem Erfassen (107) durchgeführt werden:
- ausschließliches Kontrollieren (101) der Mittel zum Erfassen (14) durch das Vertrauensprogramm (P),
- Anzeigen (105) auf dem Bildschirm (12) eines Vertrauensbilds (IC), das dem Benutzer des Endgeräts (1) bekannt ist und die Kontrolle (101) anzeigt,
wobei das Verfahren **dadurch gekennzeichnet ist, dass** es nach dem Kontrollieren (101) und vor dem Anzeigen (105) einen Schritt des Auswählens (104) des Vertrauensbilds (IC) als einen Teil eines Referenzbilds (IR) umfasst, das vom Benutzer vorbestimmt ist, wobei die Auswahl (104) von einer Erfassung zur anderen variabel ist.

2. Verfahren nach Anspruch 1, wobei das Vertrauensbild ausgehend von Auswahldaten ausgewählt wird, gewählt vom Benutzer und erworben (103) durch die Mittel zum Erfassen (14) nach dem Kontrollieren (101).

3. Verfahren nach einem der Ansprüche 1 und 2, wobei das Vertrauensprogramm (P) das Vertrauensbild eines entfernten Servers (2) empfängt (403).

4. Verfahren nach Anspruch 2 und 3 in Kombination, wobei der Empfang (403) des Vertrauensbilds (IC) durch das Senden (401) einer Anfrage an den entfernten Server gesteuert wird, wobei die Anfrage durch das Vertrauensprogramm (P) ausgehend von den erworbenen Auswahldaten (103) erzeugt wird (400), wobei die Auswahl (402) des Vertrauensbilds durch den entfernten Server (2) durchgeführt wird.

5. Verfahren nach einem der Ansprüche 2 bis 4, außerdem umfassend die Anzeige (102) auf dem Bildschirm eines Partitionsmusters (G) mit N Regionen (R) vor dem Anzeigen (105) des Vertrauensbilds (IC), wobei jede Region (R) mit einem entsprechenden Teil des Referenzbilds (IR) assoziiert ist, wobei die Auswahldaten, die durch die Mittel zum Erfassen (14) erworben werden (103), repräsentativ für eine geringere Anzahl als N von Regionen (R) des Partitionsmusters (G), ausgewählt vom Benutzer, sind.

6. Verfahren nach einem der Ansprüche 2 bis 5, wobei, da die Mittel zum Erfassen (14) ein Element umfassen, das auf Berührung empfindlich ist, die Auswahldaten für mindestens eine Zone, die vom Benutzer berührt wird, repräsentativ sind.

7. Verfahren nach Anspruch 6, wobei, da das Element, das empfindlich auf Berührung ist, im Anzeigebildschirm (12) enthalten ist, die berührte Zone repräsentativ für eine Gesamtheit von benachbarten Punkten des Bildschirms (12) ist, die seit dem In-Kontakt-Bringen eines äußeren Körpers mit der Platte bis zu einem darauf folgenden Lösen des Kontakts des äußeren Körpers mit dem Bildschirm (12) berührt werden.

8. Verfahren nach einem der Ansprüche 1 bis 7, wobei die Schritte für eine Reihe von einer ersten Erfassung und einer zweiten Erfassung nach der ersten Erfassung wiederholt werden, wobei das Verfahren außerdem die folgenden Schritte umfasst:
- Speichern (106) eines ersten Vertrauensbilds, das für die erste Erfassung angezeigt wird,
- Vergleichen (404) zwischen einem zweiten Vertrauensbild, das für die zweite Erfassung angezeigt werden soll, mit dem ersten gespeicherten Vertrauensbild,
wobei das zweite Vertrauensbild nur angezeigt (105) wird, wenn es sich vom ersten Bild unterscheidet.

9. Vertrauens-Computerprogrammprodukt (P), umfassend Programm-Codeanweisungen zur Durchführung der folgenden Schritte, wenn es durch ein Endgerät (1) durchgeführt wird, umfassend Mittel zum Erfassen (14) und einen Anzeigebildschirm (12) vor einer Erfassung (107) von vertraulichen Daten:
- ausschließliches Kontrollieren (101) der Mittel zum Erfassen,
- Steuern der Anzeige (105) auf dem Bildschirm (12) eines Vertrauensbilds (IC), das die Steuerung anzeigt, und
wobei das Computerprogrammprodukt (P) **dadurch gekennzeichnet ist, dass** es außerdem konfiguriert ist, um die Auswahl (104) des Vertrauensbilds (IC) als einen Teil eines Referenzbilds (IR), das vom Benutzer vorbestimmt ist, zu steuern, wobei die Auswahl (104) von einer Erfassung zur anderen variabel ist.

10. Endgerät (1), umfassend Mittel zum Erfassen (14), einen Anzeigebildschirm (12) und Mittel (10) zum Durchführen eines Vertrauensprogramms (P) nach Anspruch 9.

11. Endgerät (1) nach Anspruch 10, wobei die Mittel zum Erfassen (14) eine Platte umfassen, die empfindlich auf Berührung ist.

12. Endgerät (1) nach einem der Ansprüche 10 bis 11, außerdem umfassend Mittel, um mit einem entfernten Server (2) zu kommunizieren, und wobei das Computerprogrammprodukt (P) konfiguriert ist, um:
- an den entfernten Server (2) eine Auswahlanfrage (M1) zu übertragen, umfassend Auswahldaten, gewählt vom Benutzer und erworben (103) durch die Mittel zum Erfassen (14) nach dem Kontrollieren (101), und
- Empfangen (403) vom entfernten Server des Vertrauensbilds (IC), ausgewählt in Reaktion auf die Anfrage.

13. System (S), umfassend ein Endgerät (1) nach Anspruch 12 und einen Server (2), umfassend Mittel zum Verarbeiten von Daten (20), Mittel zum Kommunizieren (24) mit mindestens einem Endgerät (1) nach Anspruch 12, wobei die Mittel zum Verarbeiten von Daten konfiguriert sind, um
- ein Vertrauensbild (IC) als einen Teil des vorbestimmten Referenzbilds (IR) ausgehend von der Auswahlanfrage (M1), erhalten von den Mitteln zum Kommunizieren (24), auszuwählen, und
- an das Endgerät (1) das ausgewählte Vertrauensbild (IC) zu übertragen.

## Claims

1. Method of inputting confidential data on a terminal (1) including input means (14), means (10) for running a trusted programme (P) and a display screen (12), the method including the following steps applied before the input (107):
- taking exclusive control (101) of the input means (14) by the trusted programme (P),
- displaying (105) on the screen (12) a trusted image (IC) known to the user of the terminal (1) and indicating that exclusive control has been taken (101),
the method being **characterised in that** it includes, after control has been taken (101) and before the display (105), a selection step (104) for selecting the trusted image (IC) as part of a reference image (IR) predetermined by the user, wherein the selection (104) varies from one input to another.

2. Method according to claim 1, wherein the trusted image is selected from selection data chosen by the user and acquired (103) by the input means (14) after control has been taken (101).

3. Method according to one of claims 1 and 2, wherein the trusted programme (P) receives (403) the trusted image from a remote server (2).

4. Method according to claims 2 and 3 combined, wherein the receipt (403) of the trusted image (IC) is controlled by sending (401) a request to the remote server, wherein the request is generated (400) by the trusted programme (P) from acquired (103) selection data, and wherein the trusted image is selected (402) by the remote server (2).

5. Method according to one of claims 2 to 4, further comprising displaying (102) a partition pattern (G) with N regions (R) on the screen before displaying (105) the trusted image (IC), each region (R) being associated with a corresponding part of the reference image (IR), the selection data acquired (103) by the input means (14) being representative of a number less than N of regions (R) in the partitioning pattern (G) selected by the user.

6. Method according to one of claims 2 to 5, wherein, with the input means (14) including a touch-sensitive element, the selection data is representative of at least one zone touched by the user.

7. Method according to claim 6, wherein the touch-sensitive element is included in the display screen (12), and the touched zone is representative of a set of adjacent points touched on the screen (12) between when an external body comes into contact with the faceplate until contact between said external body and the screen (12) is subsequently broken.

8. Method according to one of claims 1 to 7, wherein the steps are repeated several times, with a first input and a second input following the first input, the method also including the steps of
- storing (106) a first trusted image displayed for the first input,
- comparing (404) a second trusted image to be displayed for the second input with the first trusted image stored,
wherein the second trusted image is displayed (105) only if it is different from the first image.

9. Trusted computer programme (P) comprising programme code instructions for executing the subsequent steps when it is run by a terminal (1) including input means (14) and a display screen (12), before confidential data is input (107):
- taking exclusive control (101) of the input means,
- controlling the display (105) of a trusted image (IC) on the screen (12) indicating that control has been taken, and
the computer programme (P) being **characterised in that** it is further configured to control the selection (104) of the trusted image (IC) as part of a reference image (IR) predetermined by the user, wherein the selection (104) varies from one input to another.

10. Terminal (1) comprising input means (14), a display screen (12), and means (10) for running a trusted programme (P) according to claim 9.

11. Terminal (1) according to claim 10, wherein the input means (14) include a touch-sensitive faceplate.

12. Terminal (1) according to one of claims 10 and 11, further comprising means for communicating with a remote server (2), and wherein the computer programme (P) is configured to:
- send a selection request (M1) to the remote server (2), said request comprising selection data chosen by the user and acquired (103) by the input means (14) after control has been taken (101), and
- receive (403) the trusted image (IC) selected in reply to the request, from the remote server.

13. System (S) comprising a terminal (1) according to claim 12 and a server (2) comprising data processing means (20) and communication means (24) for communicating with at least one terminal (1) according to claim 12, wherein the data processing means are configured to
- select a trusted image (IC) as part of the predetermined reference image (IR), from the selection request (M1) received by the communication means (24), and
- send the selected trusted image (IC) to the terminal (1).
